# EUROPÄISCHE PATENTSCHRIFT

(11) **EP 3 066 364 B1**
(45) Veröffentlichungstag und Bekanntmachung des Hinweises auf die Patenterteilung: **11.12.2019**
(21) Anmeldenummer: 14789169.1
(22) Anmeldetag: 21.10.2014
(51) Int. Cl.: F16H 57/04

(54) **GETRIEBE MIT GEHÄUSE**
GEARING HAVING A HOUSING
RÉDUCTEUR ÉQUIPÉ D'UN CARTER

(30) Priorität: 08.11.2013 DE 102013018711
(43) Veröffentlichungstag der Anmeldung: 14.09.2016
(73) Patentinhaber: SEW-EURODRIVE GmbH & Co. KG, 76646 Bruchsal (DE)
(72) Erfinder: WU, Zili, Tianjin 300060 (CN)
(86) Internationale Anmeldenummer: PCT/EP2014/002829
(87) Internationale Veröffentlichungsnummer: WO 2015/067342

(56) Entgegenhaltungen:
- DE-A1-102006 034 153
- DE-B- 1 047 820
- DE-U1- 20 312 235
- GB-A- 561 876
- JP-U- H0 618 754
- JP-U- S5 547 462
- SU-A1- 983 361
- US-A- 4 693 133
- US-A- 4 778 000
- US-A- 5 085 100

## Beschreibung

Die Erfindung betrifft ein Getriebe mit Gehäuse.

Es ist allgemein bekannt, dass ein Gehäuse eines Getriebes Lageraufnahmen aufweist, in denen die Lager der Wellen des Getriebes aufnehmbar sind und die entsprechenden Kräfte abgeleitet werden.

**Aus der** DE 10 2006 034 153 A1 **ist als nächstliegender Stand der Technik ein Getriebe** bekannt mit Gehäuse,wobei eine Wanne zur Ölführung und Verminderung von Plantschverlusten einen Umfangsabschnitt eines Verzahnungsteils, insbesondere Zahnrades, umgibt, insbesondere in radialer und in axialer Richtung,wobei die Wanne zumindest aus drei Teilen, also zumindest aus einer Bodenplatte und zwei Seitenwänden, zusammengesetzt ist, wobei die Wanne am Gehäuse befestigt ist,wobei die Wanne eine Ausnehmung, insbesondere einen Kanal, aufweist, insbesondere an ihrem tiefsten Oberflächenbereich, insbesondere also an dem den größten Radialabstand aufweisenden Oberflächenbereich,insbesondere wobei bei Drehbewegung des Zahnrades Öl aus dem Ölsumpf des Getriebes durch die Ausnehmung hindurch zwischen Wanne und Zahnrad gefördert wird, insbesondere auf eine höhere Position als der Pegel des Ölsumpfes, wobei Bodenplatte und die Seitenwände Stanz-Biegeteile sind, wobei das Gehäuse ein Gehäuseoberteil und ein Gehäuseunterteil aufweist, wobei das Gehäuseoberteil einen rahmenartigen Tragabschnitt aufweist, an dem Wandabschnitte angeformt sind,wobei der rahmenartige Tragabschnitt mit den Wandabschnitten einstückig, also einteilig, als Stahlgussteil ausgeformt ist.

**Aus der** GB 561 876 A **ist eine verbesserte Konstruktion eines Getriebegehäuses bekannt.**

**Aus der** US 4 693 133 A **ist ein schallreduziertes Getriebe bekannt.**

**Aus der** SU983 361 A1 **ist ein Getriebe bekannt.**

**Aus der** US 5 085 100 A **ist ein Getriebesystem bekannt.**

**Aus der** DE 203 12 235 U1 **ist ein Getriebe, insbesondere ein Radsatzgetriebe für den Einsatz in Schienenfahrzeugen bekannt.**

**Aus der** JP H06 18754 U **ist ein Getriebe mit einem Ölfördersystem bekannt.**

**Aus der** DE 10 47 820 B **ist eine Schmiervorrichtung für Kegelradachsgetriebe in Schienenfahrzeugen bekannt.**

**Aus der** US 4 778 000 A **ist ein Kühlsystem bekannt.**

**Aus der** JP S55 47462 U **ist ein Tragrahmen bekannt.**

Der Erfindung liegt daher die Aufgabe zugrunde, die Umwelt zu schonen, insbesondere die Ressourcen zu schonen.

Erfindungsgemäß wird die Aufgabe bei dem Gehäuse für ein Getriebe nach den in Anspruch 1 angegebenen Merkmalen gelöst.

Wichtige Merkmale der Erfindung bei dem Getriebe mit Gehäuse sind, dass eine Wanne zur Ölführung und Verminderung von Plantschverlusten einen Umfangsabschnitt eines Verzahnungsteils, insbesondere Zahnrades, umgibt, insbesondere in radialer und in axialer Richtung,
wobei die Wanne zumindest aus drei Teilen, also zumindest aus einer Bodenplatte und zwei Seitenwänden, zusammengesetzt ist, wobei die Bodenplatte mit den beiden Seitenwänden schraubverbunden ist,
wobei die Wanne am Gehäuse befestigt ist,
wobei die Wanne eine Ausnehmung, insbesondere einen Kanal, aufweist, insbesondere an ihrem tiefsten Oberflächenbereich, insbesondere also an dem den größten Radialabstand aufweisenden Oberflächenbereich,
insbesondere wobei bei Drehbewegung des Zahnrades Öl aus dem Ölsumpf des Getriebes durch die Ausnehmung hindurch zwischen Wanne und Zahnrad gefördert wird, insbesondere auf eine höhere Position als der Pegel des Ölsumpfes,
wobei Bodenplatte und die Seitenwände Stanz-Biegeteile sind.

Von Vorteil ist dabei, dass mittels des Zahnrads Öl aus dem Ölsumpf des Getriebes an eine höher gelegene Stelle, wie beispielsweise ein Zwischenspeicher oder eine Sammelrinne, förderbar ist und somit von dort Lager und in Eingriff stehende Verzahnungen schmierbar sind mit Schmieröl. Außerdem sind mittels der Wanne, welche zumindest abschnittsweise der Kontur des Zahnrads, also der Einhüllenden des drehenden Zahnrads, also dem zylindrischen Raumberiech, welcher durch das drehende Zahnrad berührt ist, entsprechend folgt, Plantschverluste verminderbar. Hierzu ist der Spalt zwischen dem drehenden Zahnrad und der Wanne, insbesondere der Bodenplatte der Wanne gering auszuführen. Die Bodenplatte ist mit ihrem dem Zahnrad zugewandten Oberflächenabschnitt auf einem Radialabstand angeordnet, der nur gering beabstandet ist von dem Radialabstand der Köpfe der Verzahnung des Zahnrades zur Achse des Zahnrades. #Somit erstreckt sich der dem Zahnrad zugewandte Oberflächenabschnitt der Bodenplatte im Wesentlichen in Umfangsrichtung und in axialer Richtung, weist aber mit Ausnahme einer Ausnehmung stets denselben Radialabstand zur Achse des Zahnrades, insbesondere zur Achse derjenigen Welle, mit welcher das Zahnrad drehfest verbunden ist.

Die Ausführung der Wanne aus nur drei die Wanne bildenden Teilen, nämlich Bodenplatte und Seitenwänden, ermöglicht eine besonders kostengünstige Herstellung durch Schraubverbinden dieser Teile.

Bei einer vorteilhaften Ausgestaltung ist der Abstand, insbesondere der in radialer Richtung bestehende Abstand, zwischen der Bodenplatte und den Köpfen der Verzahnung im von der Wanne überdeckten Umfangswinkelbereich konstant. Von Vorteil ist dabei, dass ein geringer Spalt als Abstand genügt, um die Pumpwirkung auszuführen. Somit sind die Plantschverluste verringerbar.

Bei einer vorteilhaften Ausgestaltung weist die Bodenplatte in radialer Richtung sich erstreckende Laschenabschnitte auf, an welchen die Seitenwände mittels Schraubverbindung schraubverbunden sind. Von Vorteil ist dabei, dass die Laschenabschnitt in einfacher Weise herstellbar sind durch Biegen eines Stanzblechs. Außerdem ist der Laschenabschnitt parallel ausrichtbar zur Seitenwand, also senkrecht zum in Umfangsrichtung und in axialer Richtung sich erstreckendem Oberflächenabschnitt der Bodenplatte. Somit ist eine einfache stabile Verbindung zwischen Bodenplatte und Seitenwand erzielbar. Bei einer Getriebebaureihe, bei welcher verschieden große Zahnräder zum Einsatz gelangen, da für jedes Getriebe der Getriebebaureihe eine jeweils verschiedene Übersetzungszahl ausführbar ist. Somit ist aber die Bodenplatte auf jeweils angepasstem Radialabstand zu befestigen und somit die axial ausgerichteten Schrauben der Schraubverbindung zwischen Bodenplatte und Seitenwand entsprechend auf verschiedenem Radialabstand.

Bei einer vorteilhaften Ausgestaltung weist eine Seitenwand eine Kennzeichnung auf, an der ein Bohrloch zum Durchführen einer Schraube der Schraubverbindung anbringbar ist. Von Vorteil ist dabei, dass je nach Übersetzungszahl des Getriebes oder Größe, insbesondere Kopfkreisdurchmesser, des Zahnrades ein Bohrloch auf dem jeweils unterschiedlichen gekennzeichneten Radialabstand anbringbar ist und somit die Wanne auf verschiedenem Radialabstand anordenbar ist.

Bei einer vorteilhaften Ausgestaltung ist die Ausnehmung, insbesondere der Kanal, begrenzt durch die Bodenplatte und die beiden Seitenwände. Von Vorteil ist dabei, dass eine Ölfördernde Ausnehmung in einfacher Weise und kostengünstig herstellbar ist.

Bei einer vorteilhaften Ausgestaltung ist die Bodenplatte und jede Seitenwand jeweils einstückig, also einteilig, ausgebildet. Von Vorteil ist dabei, dass jedes der drei Teile als Stanzbiegeteil herstellbar ist, also sehr einfach und kostengünstig. Dabei sind sogar die beiden Seitenwände gleichartig ausführbar.

Bei einer vorteilhaften Ausgestaltung ist das Gehäuse für ein Getriebe vorgesehen,
wobei das Gehäuse ein Gehäuseoberteil und ein Gehäuseunterteil aufweist,
**wobei** das Gehäuseoberteil einen rahmenartigen Tragabschnitt aufweist, an dem Wandabschnitte angeformt sind,
wobei der rahmenartige Tragabschnitt mit den Wandabschnitten einstückig, also einteilig, ausgeformt ist, insbesondere als Gussteil, insbesondere als Stahlgussteil.

Von Vorteil ist dabei, dass nur der Tragabschnitt viel Material, also auch Masse, enthalten muss, nicht aber die Wandabschnitte. Somit ist auf materialsparende Weise erreichbar, dass hohe Kräfte übertragen werden.

Bei einer vorteilhaften Ausgestaltung ist die größte Wandstärke der Wandabschnitte kleiner als die größte Wandstärke des Tragabschnitts. Von Vorteil ist dabei, dass die Wandabschnitte mit dünner Wandstärke ausführbar sind und somit das Gehäuse materialsparend ausführbar ist.

Bei einer vorteilhaften Ausgestaltung weist der rahmenartige Tragabschnitt des Gehäuseoberteils eine erste und eine zweite Querrippe auf, insbesondere wobei die Querrippen sich hauptsächlich in horizontaler Richtung erstrecken, insbesondere also in horizontaler Richtung weiter ausgedehnt sind als in jeder hierzu transversalen Richtung,
wobei der rahmenartige Tragabschnitt zwei erste Rippen aufweist,
wobei die zwei ersten Rippen voneinander beabstandet und sind und jeweils mit der ersten Querrippe verbunden sind, insbesondere an zwei voneinander beabstandeten Stellen,
insbesondere wobei die ersten Rippen sich hauptsächlich in vertikaler Richtung erstrecken, insbesondere also in vertikaler Richtung weiter ausgedehnt sind als in jeder hierzu transversalen Richtung,
wobei die zwei zweiten Rippen voneinander beabstandet sind und jeweils mit der zweiten Querrippe verbunden sind, insbesondere an zwei voneinander beabstandeten Stellen,
insbesondere wobei die zweiten Rippen sich hauptsächlich in vertikaler Richtung erstrecken, insbesondere also in vertikaler Richtung weiter ausgedehnt sind als in jeder hierzu transversalen Richtung. Von Vorteil ist dabei, dass eine besonders hohe Stabilität mit geringem Materialaufwand erreichbar ist. Denn der rahmenartige Tragabschnitt weist eine rechteckförmige Gestalt auf, bei der das Rechteck an seinen beiden gegenüberliegenden Seiten aus der Ebene des Rechtecks herausgebogen ist, so dass die abgebogenen Bereiche im Wesentlichen in zur Ebene senkrechten weiteren Ebenen angeordnet sind, die zueinander beabstandet und parallel sind.

Bei einer vorteilhaften Ausgestaltung weist jede erste Rippe und jede zweite Rippe an ihrem von der jeweiligen Querrippe abgewandten Endbereich eine Tragöse auf. Von Vorteil ist dabei, dass die beim Transport ins Gehäuse eingeleiteten Kräfte direkt in den rahmenartige Tragabschnitt eingeleitet werden und nicht in Wandabschnitte mit dünner Wandstärke.

Bei einer vorteilhaften Ausgestaltung ist eine erste Rippe an ihrem Endbereich mit einem Balken, insbesondere Tragbalken, verbunden, der an seinem anderen Ende mit dem Endbereich einer zweiten Rippe verbunden ist,
wobei die andere Rippe an ihrem Endbereich mit einem Balken, insbesondere Tragbalken, verbunden ist, der wiederum an seinem anderen Ende mit dem Endbereich der anderen zweiten Rippe verbunden ist,
insbesondere wobei die beiden Balken parallel und voneinander beabstandet angeordnet sind. Von Vorteil ist dabei, dass eine hohe Stabilität mittels der Verstrebungen erreichbar ist.

Bei einer vorteilhaften Ausgestaltung ist eine Welle des Getriebes mittels eines Lagers im Gehäuse gelagert,
wobei ein erster Teil der Lageraufnahme im Gehäuseoberteil und ein zweiter Teil der Lageraufnahme im Gehäuseunterteil angeordnet ist,
wobei der erste Teil der Lageraufnahme als aufgedickter Abschnitt ausgeführt ist und mit demjenigen Bereich der Querrippen verbunden ist, an dem auch die jeweilige Rippe verbunden ist. Von Vorteil ist dabei, dass eine zusätzliche Verstrebung des rahmenartigen Tragabschnitts mittels der aufgedickten Bereiche vorgesehen ist.

Bei einer vorteilhaften Ausgestaltung verschließt ein Gehäusedeckel eine Öffnung des Gehäuseoberteils 1, welche von dem rahmenförmigen Tragabschnitt umfasst ist, insbesondere mit Abstand, insbesondere so dass der rahmenförmige Tragabschnitt die Öffnung nicht direkt berührt sondern von der Öffnung beabstandet ist. Von Vorteil ist dabei, dass durch die Öffnung Getriebeteile inspizierbar sind und Wartungsarbeiten ausführbar sind. Dabei fließt auch kein Schmieröl aus dem Getriebe heraus, da die Öffnung an der Oberseite des Gehäuseoberteils angeordnet ist.

Wichtige Merkmale bei dem Getriebe sind, dass es mit einem Gehäuse vorgesehen ist, wobei
eine Welle des Getriebes mittels eines Lagers im Gehäuse gelagert ist,
wobei ein erster Teil der Lageraufnahme im Gehäuseoberteil und ein zweiter Teil der Lageraufnahme im Gehäuseunterteil angeordnet ist,
wobei der erste Teil der Lageraufnahme als aufgedickter Abschnitt ausgeführt ist und mit demjenigen Bereich der Querrippen verbunden ist, an dem auch die jeweilige Rippe verbunden ist.

Von Vorteil ist dabei, dass eine hohe Verdrehsteifigkeit und eine hohe mechanische Stabilität erreichbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein erfindungsgemäßes Getriebegehäuse für ein Getriebe in einer ersten Blickrichtung in Schrägansicht gezeigt, das aus einem Gehäuseoberteil 1 und einem Gehäuseunterteil 2 zusammengesetzt ist..

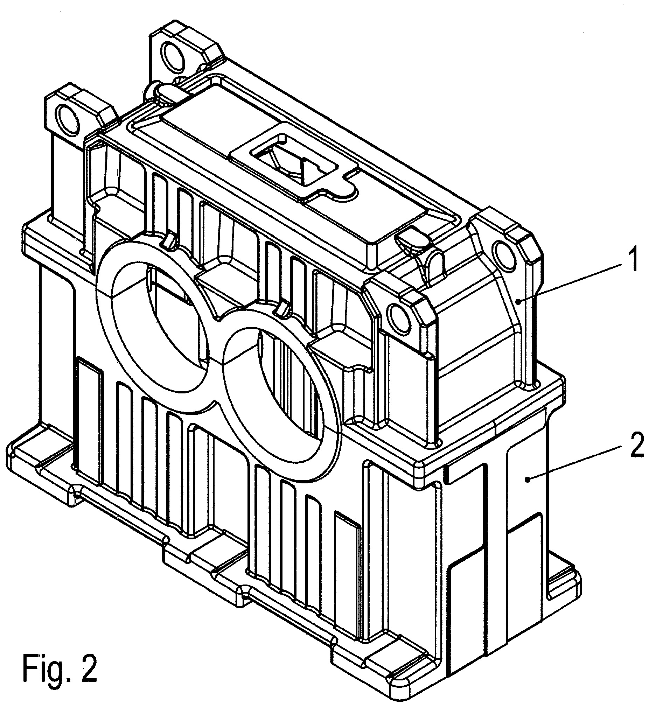

In der Figur 2 ist das erfindungsgemäße Getriebegehäuse in einer anderen Blickrichtung in Schrägansicht gezeigt.

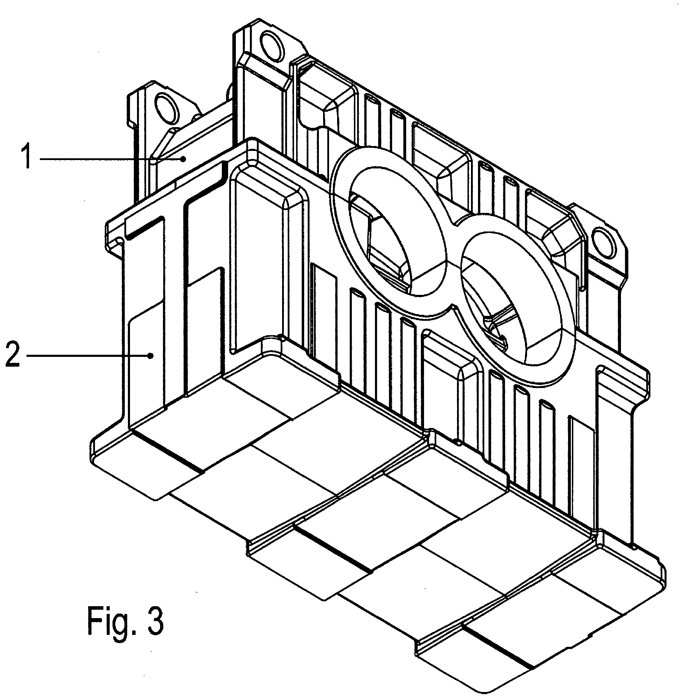

In der Figur 3 ist das erfindungsgemäße Getriebegehäuse in einer dritten Blickrichtung in Schrägansicht gezeigt.

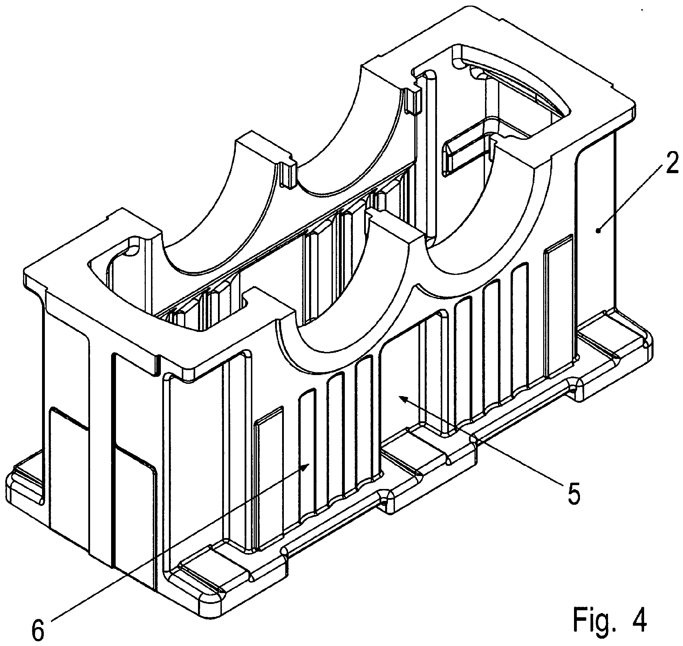

In der Figur 4 ist das Gehäuseunterteil 2 in Schrägansicht dargestellt.

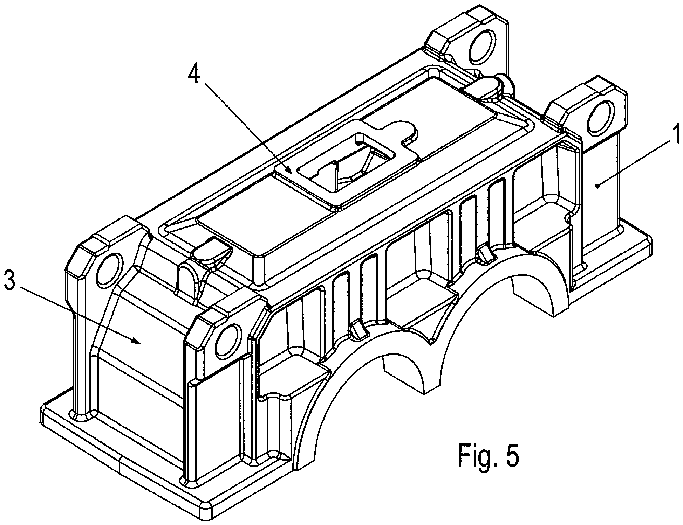

In der Figur 5 ist das Gehäuseoberteil 1 in Schrägansicht dargestellt.

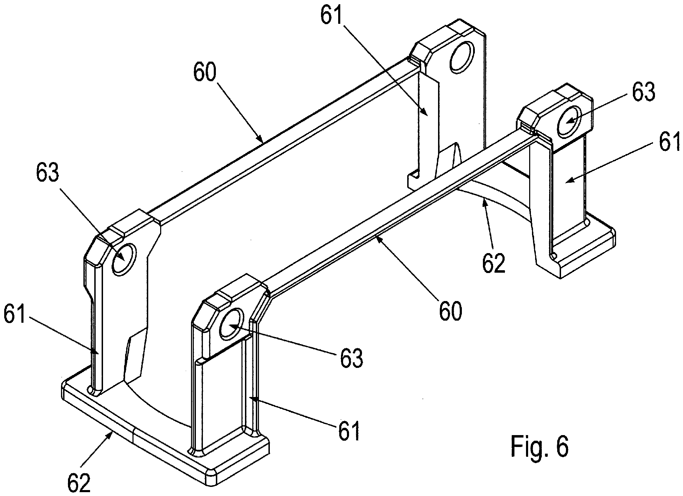

In der Figur 6 ist der rahmenartige Tragabschnitt des Gehäuseoberteils 1 dargestellt.

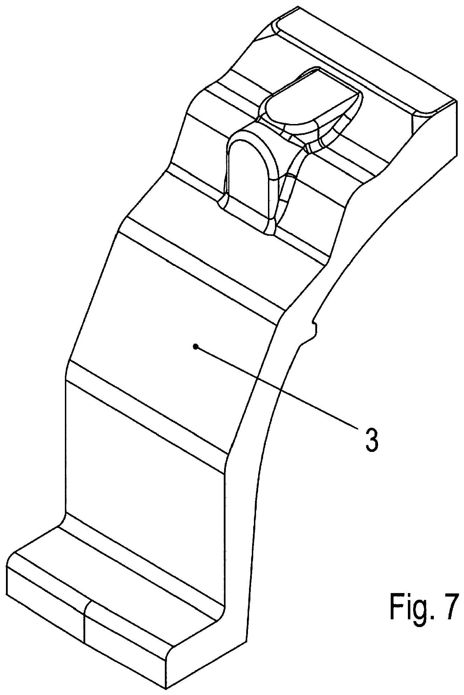

In der Figur 7 ist als Ausschnitt aus dem Gehäuseoberteil 1 ein Seitenwandabschnitt 3 gezeigt, welcher in den rahmenartigen Tragabschnitt eingefügt ist.

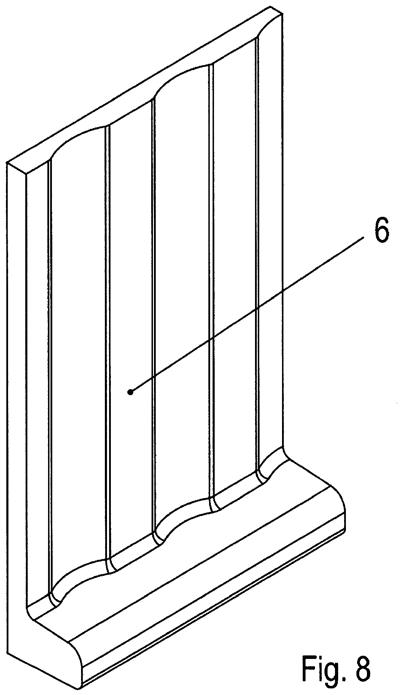

In der Figur 8 ist als Ausschnitt aus dem Gehäuseunterteil 2 ein Wandabschnitt mit Wellenstruktur gezeigt, insbesondere also einen konkav-konvex ausgebildetem Wandabschnitt.

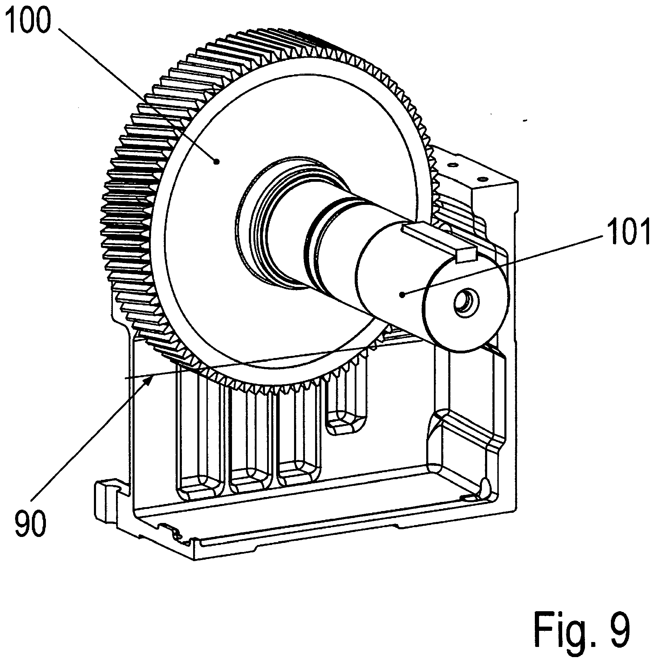

In der Figur 9 ist der Ölstand 90 dargestellt.

In der Figur 10 ist ein Zahnrad 100 des Getriebes gezeigt, das drehfest auf einer im Getriebegehäuse gelagerten Welle 101 angeordnet ist und von einer am Gehäuseunterteil 2 befestigten Wanne zumindest teilweise umgeben ist.

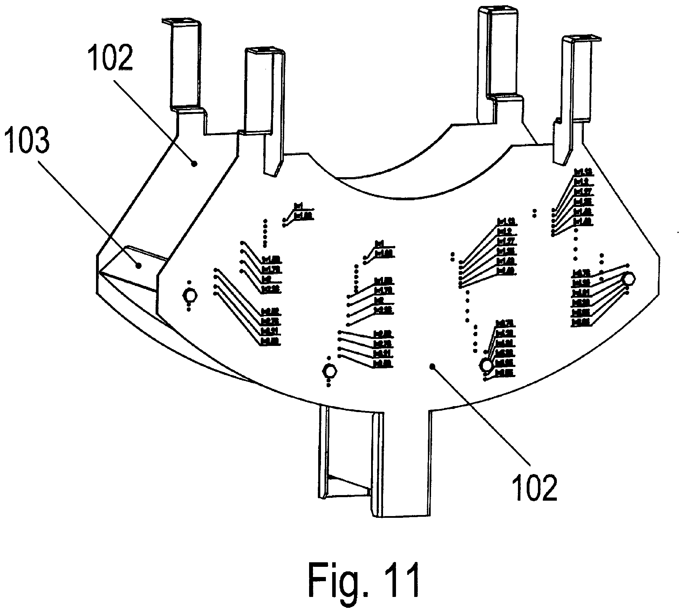

In der Figur 11 ist die Wanne selbst in Schrägansicht gezeigt, wobei die Wanne Seitenwände 102 und eine Bodenplatte 103 aufweist.

In der Figur 12 ist eine Seitenwand 102 der Wanne gezeigt.

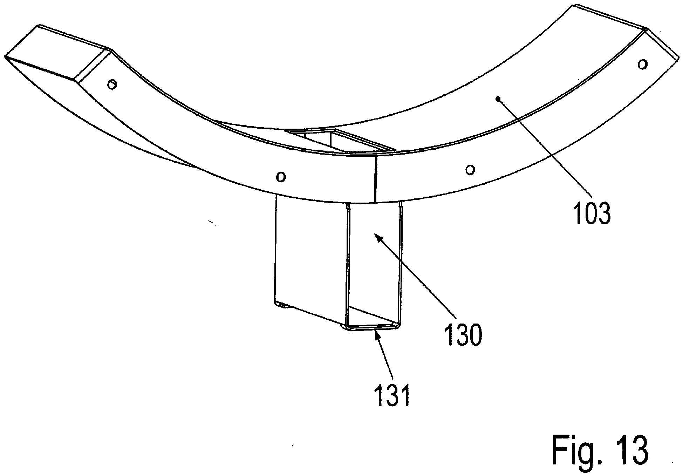

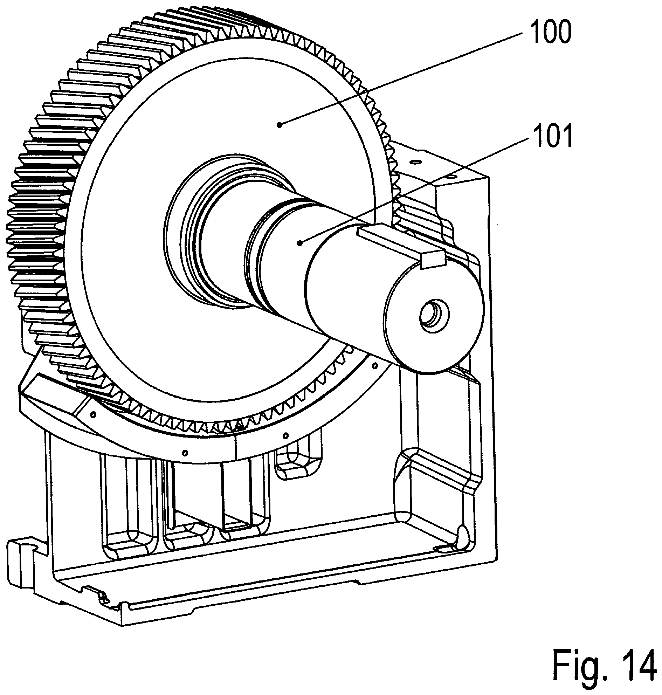

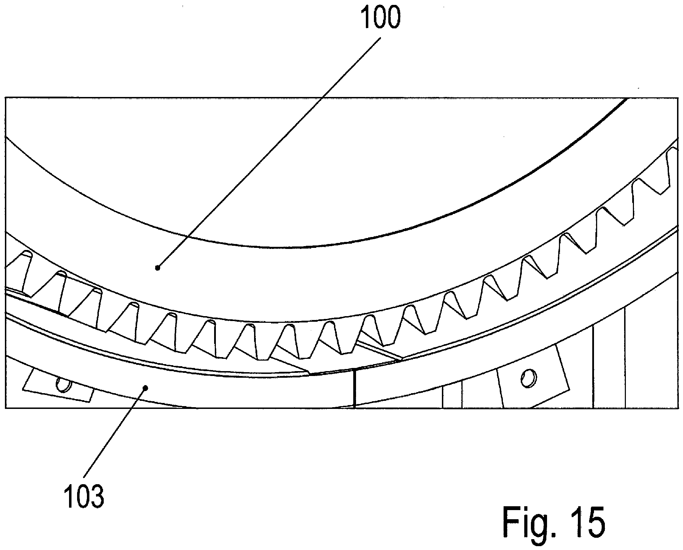

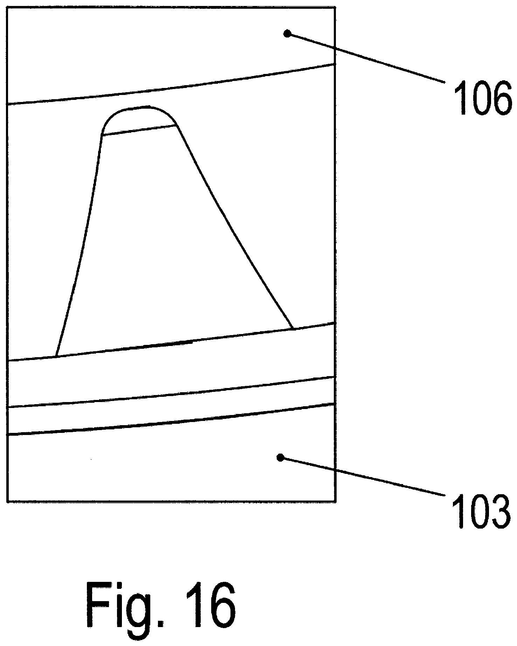

In der Figur 13 ist die Bodenplatte 103 der Wanne gezeigt.

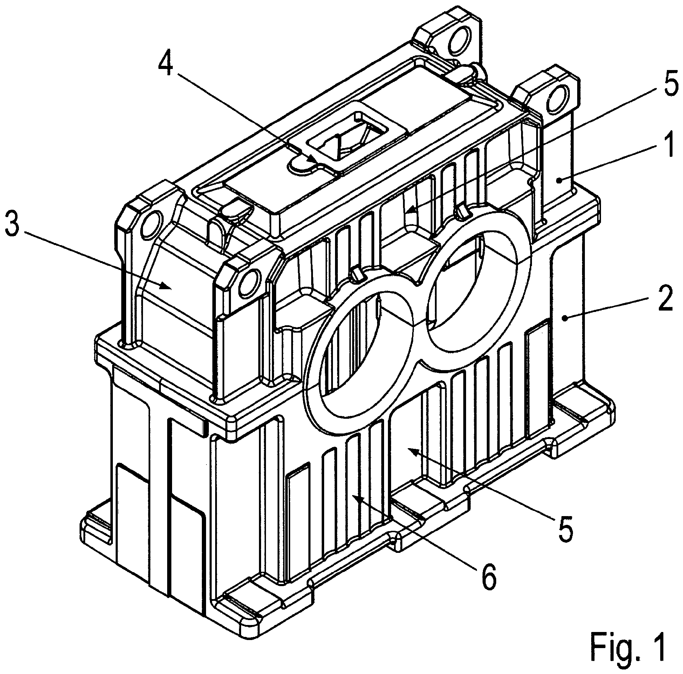

Wie in Figur 1 gezeigt, ist das Gehäuseunterteil 2 unter dem Gehäuseoberteil 1 angeordnet. In vertikaler Richtung ist also das Gehäuseoberteil 1 oberhalb des Gehäuseunterteils 2 angeordnet.

Das Gehäuseoberteil 1 weist einen rahmenartigen Tragabschnitt auf, welcher den wesentlichen Teil der Kräfte aufnimmt und durchleitet. Die restlichen Abschnitte des Gehäuseoberteils 1 sind nur zum öldichten Einhausen des Getriebeinneren ausgebildet, also mit dünnerer Wandstärke ausgebildet als der Tragabschnitt, und schmiegen sich an den Tragabschnitt an.

Somit ist das Gehäuseoberteil 1 und auch das Gehäuseunterteil 2 schalenartig ausgeformt.

Der rahmenartige Tragabschnitt des Gehäuseoberteils 1 weist eine erste Querrippe 62 auf. Diese erstreckt sich hauptsächlich in horizontaler Richtung.

Zwei erste Rippen 61 sind voneinander beabstandet und sind jeweils mit der ersten Querrippe 61 verbunden, insbesondere an zwei voneinander beabstandeten Stellen.

Die ersten Rippen 61 erstrecken sich hauptsächlich in vertikaler Richtung, sind also in vertikaler Richtung weiter ausgedehnt als in jeder hierzu transversalen Richtung.

Der rahmenartige Tragabschnitt des Gehäuseoberteils 1 weist auch eine zweite Querrippe 62 auf. Diese erstreckt sich hauptsächlich in horizontaler Richtung.

Zwei zweite Rippen 61 sind voneinander beabstandet und sind jeweils mit der zweiten Querrippe 61 verbunden, insbesondere an zwei voneinander beabstandeten Stellen.

Die zweiten Rippen 61 erstrecken sich hauptsächlich in vertikaler Richtung, sind also in vertikaler Richtung weiter ausgedehnt als in jeder hierzu transversalen Richtung..

Jede erste Rippe 61 und jede zweite Rippe 61 weist an ihrem von der jeweiligen Querrippe abgewandten Endbereich eine Tragöse 63 auf. Somit ist das Getriebe mittels Haken oder Seil aufnehmbar an den Tragösen und einfach transportierbar. Die beim Transport auftretenden Kräfte werden als an den Tragösen 63 in die Endbereiche und somit den rahmenartigen Tragabschnitt eingeleitet. Somit wird das Getriebegehäuse nur unwesentlich verformt und bleibt unbeschädigt.

Eine erste Rippe 61 ist an ihrem Endbereich mit einem Balken 60, insbesondere Tragbalken, verbunden, der an seinem anderen Ende mit dem Endbereich einer zweiten Rippe 61 verbunden ist. Ebenso ist die andere Rippe 61 an ihrem Endbereich mit einem Balken 60, insbesondere Tragbalken, verbunden, der wiederum an seinem anderen Ende mit dem Endbereich der anderen zweiten Rippe 61 verbunden ist. Die beiden Balken 60 sind parallel und voneinander beabstandet angeordnet.

Wie oben beschrieben, sind an dem so aus den Rippen 61, Querrippen 62 und Balken 60 gebildeten rahmenartigen Tragabschnitt des Gehäuseoberteils 1 Wandabschnitte angeschmiegt, so dass das schalenartige Gehäuseoberteil einteilig ausformbar ist, insbesondere als Gussteil.

Hierbei sind also die Wandabschnitte, insbesondere auch zwei Seitenwandabschnitte 3 und der Wandabschnitt mit konkav-konvexer Wellenstruktur an das rahmenartige Tragabschnitt angeformt und angeschmiegt und einstückig ausgebildet.

Die Balken 60 erstrecken sich hauptsächlich in horizontaler Richtung, sind also horizontalweiter ausgedehnt als in jeder hierzu transversalen Richtung.

Die Realisierung des rahmenartigen Tragabschnitts erfolgt also durch eine Aufdickung der Wandstärke.

Zusätzlich sind auch aufgedickte Bereiche am Gehäuseoberteil 1 vorgesehen, welche als Lageraufnahme für zumindest einen Teil, insbesondere die Hälfte, des Umfangs eines Außenrings eines Lagers vorgesehen sind. Diese bogenartig ausgeformten aneinander grenzenden, aufgedickten Bereiche sind mit den Querrippen 62 verbunden, insbesondere jeweils in demjenigen Endbereich, in welchem die jeweilige Rippe 61 verbunden sind.

Die konkav-konvexe Wellenstruktur der Wandabschnitte vergrößert die Oberfläche und verringert somit den Wärmeübergangswiderstand zur Umgebungsluft. Eine besonders starke Vertiefung ist hierbei als Vertiefung 5 für Betätigungsbereich für Schraubverbindungen vorgesehen. Dabei sind die in den Figuren nicht gezeigten Schrauben Verbindungsschrauben, mit welchen das Gehäuseoberteil 1 und das Gehäuseunterteil 2 schraubverbunden sind.

Das Gehäuseunterteil 2 weist eine Wellenstruktur 6 auf, insbesondere einen konkavkonvexen Wandabschnitt, der ebenfalls oberflächenvergrößernd ist und somit den Wärmeübergangswiderstand vom Getriebeinnenraum, insbesondere Schmieröl, zur Umgebungsluft hin verringert.

Der Gehäusedeckel ist zum Verschließen einer Öffnung des Gehäuseoberteils 1 vorgesehen, welche von dem rahmenförmigen Tragabschnitt umfasst ist, insbesondere mit Abstand. Dies bedeutet, dass der rahmenförmige Tragabschnitt die Öffnung nicht direkt berührt sondern von der Öffnung beabstandet ist.

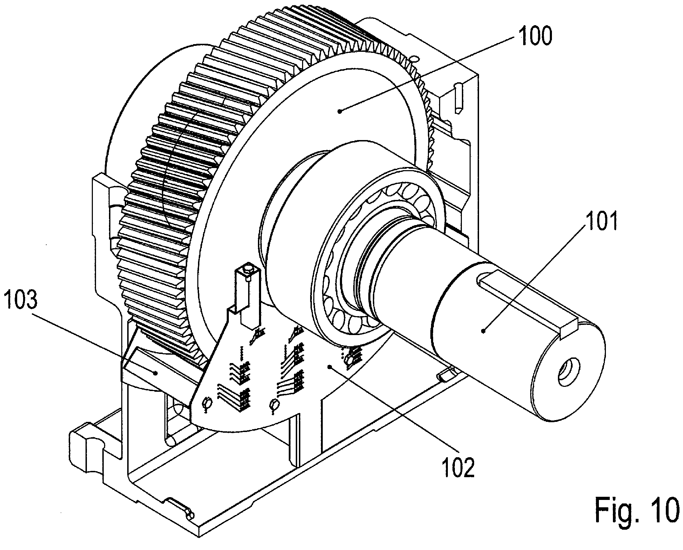

Wie in Figur 10 gezeigt, ist das Zahnrad 100 drehfest mit der Welle 101 verbunden, welche über ein Lager im Gehäuse gelagert ist. Dabei ist das Lager in einer Lageraufnahme des Gehäuses aufgenommen, wobei ein erster Teil der Lageraufnahme im Gehäuseoberteil 1 und ein zweiter Teil der Lageraufnahme im Gehäuseunterteil 2 angeordnet ist.

Der das Zahnrad 100 umgebende untere Raumbereich ist von der Wanne umgeben, wobei die Wanne Seitenwände 102 und eine Bodenplatte 103 aufweist. Sie ist somit aus drei Stücken fertigbar.

Dabei sind die Seitenwände 102 der Wanne an der Bodenplatte 103 befestigt. Die Bodenplatte 103 weist an ihrem tiefsten Bereich eine nach unten gerichtete Ausstülpung 130 auf. Die Ausstülpung 130 ist radial weg vom Zahnrad gerichtet und an ihrem radial äußeren Endbereich offen ausgeführt. Somit gelangt #Schmieröl des Getriebes vom Ölsumpf des Getriebes durch die Ausstülpung 130 bis zum Zahnrad 100. Seitlich, also beidseitig in axialer Richtung, ist die Ausstülpung verschlossen durch einen jeweiligen Laschenabschnitt 120 der Seitenwände 102, so dass ein radial zum Zahnrad 100 durchgehender Kanal gebildet ist.

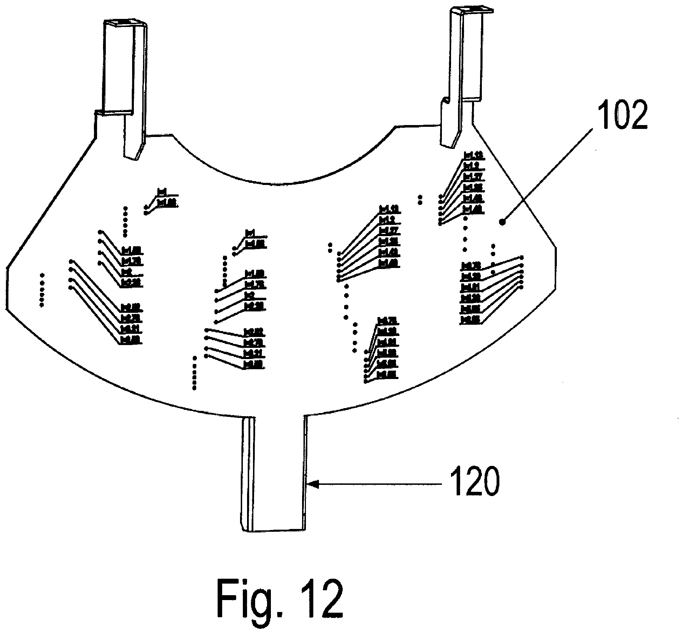

Wie aus Figur 12 ersichtlich, sind die Seitenwände 102 jeweils als Blechteil ausgestanzt und weisen an ihrer axialen Außenseite Kennzeichnungen auf, welche die Positionen einzubringender Bohrlöcher kennzeichnen, insbesondere abhängig von der Übersetzungszahl des Getriebes und/oder Verzahnungsdaten des Zahnrades 100.

Durch die Bohrlöcher hindurch sind Schrauben geführt, welche eine Schraubverbindung zwischen Bodenplatte 103 und jeweiliger Seitenwand 102 ausführbar machen.

Somit ist je nach Größe beziehungsweise anderen Verzahnungsdaten die Bodenplatte auf einem optimalen Radialabstand zur Zahnradmittelachse anordenbar.

Die Bodenplatte 103 ist ebenfalls als Stanz-Biegeteil gefertigt und weist einen U-förmigen Querschnitt auf. Dabei ist sie derart gebogen ausgeführt, dass der Abstand zwischen der Verzahnung, insbesondere den Köpfen der im selben Umfangswinkel wie die Bodenplatte 103 sich befindenden Zähne der Verzahnung des Zahnrades 100 konstant ist. Es ist also ein schmaler Spalt zwischen diesen Zahnköpfen und der Bodenplatte 103 vorgesehen.

Bei Drehbewegung des Zahnrades 100 entsteht somit eine Pumpwirkung, da das in den Zahnlücken sich befindende Schmieröl mit höherer Geschwindigkeit bewegt wird als das Schmieröl im Kanal. Auf diese Weise wird also Schmieröl durch den Kanal vom Ölsumpf zum Zahnrad 100 befördert und von diesem dann mitbewegt

Die Wanne vermindert auch die Plantschverluste bei Bewegung des Zahnrads 100. Denn das Eintauchen der Zähne der Verzahnung des Zahnrads 100 findet in dem von der Wann umgebenen Raumberiech statt.

Die U-förmige gebogene Bodenplatte 103 ist mit Ausnehme der Laschenabschnitte 120 und der Ausstülpung 130 kreisförmig in Umfangsrichtung gebogen, so dass der Abstand zwischen den Zähnen der Verzahnung des Zahnrades 100 und der Bodenplatte 103 im entsprechenden Umfangswinkelbereich im Wesentlichen konstant ist.

Die Laschenabschnitte 120 sind nach radial außen gerichtet, so dass die jeweilige Seitenwand 102 in axialer Richtung an die Bodenplatte 103, insbesondere an deren Laschenabschnitte 120, andrückbar und schraubverbindbar ist.

Mittels der Pumpwirkung des Zahnrades 100 in Zusammenwirkung mit der Wanne wird Öl auf eine höher als der Ölpegel des Ölsumpfes liegende Position gepumpt und von dort über einen Zwischenspeicher oder direkt zu den zu schmierenden Stellen, wie Lager oder im Eingriff stehende Verzahnungen, geführt. Hierzu sind entsprechende Leitungen oder Rohre vorgesehen.

Die Ausstülpung 130 ist mittels Herausbiegen aus der Urform des Bodenplatte 103 herstellbar. Hierzu ist ein Stanzblech derart gebogen, dass zwei kreisabschnittsförmig gebogene Berieche über einen im Wesentlichen rechteckförmig gebogenen Bereich voneinander beabstandet sind. Danach werden die kreisabschnittsförmig gebogenen Beriech aneinander angedrückt und bilden somit den kreisförmigen Bereich der Bodenplatte 103. Dabei umfassen die kreisabschnittsförmig gebogene Berieche eine Ausnehmung. Der rechteckförmig gebogene Bereich weist ebenfalls eine mittig angeordnete Ausnehmung auf und bildet somit die Ausstülpung 130.

### Bezugszeichenliste

- 1: Gehäuseoberteil
- 2: Gehäuseunterteil
- 3: Seitenwandabschnitt
- 4: Gehäusedeckel
- 5: Vertiefung für Betätigungsbereich für Schraubverbindungen
- 6: Wellenstruktur, insbesondere konkav-konvexer Wandabschnitt
- 60: Balken
- 61: Rippe
- 62: Querrippe
- 63: Tragösen
- 90: Ölstand
- 100: Zahnrad
- 101: Welle
- 102: Seitenwand
- 103: Bodenplatte
- 120: Laschenabschnitt
- 130: Ausstülpung

## Patentansprüche

1. Getriebe mit Gehäuse,
wobei eine Wanne zur Ölführung und Verminderung von Plantschverlusten einen Umfangsabschnitt eines Verzahnungsteils, insbesondere Zahnrades (100), umgibt, insbesondere in radialer und in axialer Richtung,
wobei die Wanne zumindest aus drei Teilen, also zumindest aus einer Bodenplatte (103) und zwei Seitenwänden, zusammengesetzt ist, wobei die Bodenplatte (103) mit den beiden Seitenwänden schraubverbunden ist,
wobei die Wanne am Gehäuse befestigt ist,
wobei die Wanne eine Ausnehmung, insbesondere einen Kanal, aufweist, insbesondere an ihrem tiefsten Oberflächenbereich, insbesondere also an dem den größten Radialabstand aufweisenden Oberflächenbereich,
wobei bei Drehbewegung des Zahnrades (100) Öl aus dem Ölsumpf des Getriebes durch die Ausnehmung hindurch zwischen Wanne und Zahnrad (100) gefördert wird, insbesondere auf eine höhere Position als der Pegel des Ölsumpfes,
wobei Bodenplatte (103) und die Seitenwände Stanz-Biegeteile sind,
**wobei die Bodenplatte (103) in radialer Richtung sich erstreckende Laschenabschnitte (120) aufweist, an welchen die Seitenwände mittels Schraubverbindung schraubverbunden sind,**
**wobei eine Seitenwand (102) eine Kennzeichnung aufweist, an der ein Bohrloch zum Durchführen einer Schraube der Schraubverbindung anbringbar ist,**
**wobei das Gehäuse ein Gehäuseoberteil (1) und ein Gehäuseunterteil (2) aufweist,**
**wobei das Gehäuseoberteil (1) einen rahmenartigen Tragabschnitt aufweist, an dem Wandabschnitte angeformt sind,**
**wobei der rahmenartige Tragabschnitt mit den Wandabschnitten einstückig, also einteilig, als Stahlgussteil ausgeformt ist.**

2. Getriebe nach Anspruch 1,
**dadurch gekennzeichnet, dass**
der Abstand, insbesondere der in radialer Richtung bestehende Abstand, zwischen der Bodenplatte (103) und den Köpfen der Verzahnung im von der Wanne überdeckten Umfangswinkelbereich konstant ist.

3. Getriebe nach mindestens einem der vorangegangenen Ansprüche,
**dadurch gekennzeichnet, dass**
die Ausnehmung, insbesondere der Kanal, begrenzt ist durch die Bodenplatte (103) und die beiden Seitenwände.

4. Getriebe nach mindestens einem der vorangegangenen Ansprüche,
**dadurch gekennzeichnet, dass**
die Bodenplatte (103) und jede Seitenwand (102) jeweils einstückig, also einteilig, ausgebildet ist.

5. Getriebe nach mindestens einem der vorangegangenen Ansprüche,
**dadurch gekennzeichnet, dass**
die größte Wandstärke der Wandabschnitte kleiner ist als die größte Wandstärke des Tragabschnitts.

6. Getriebe nach mindestens einem der vorangegangenen Ansprüche,
**dadurch gekennzeichnet, dass**
der rahmenartige Tragabschnitt des Gehäuseoberteils (1) eine erste und eine zweite Querrippe (62) auf, insbesondere wobei die Querrippen sich hauptsächlich in horizontaler Richtung erstrecken, , insbesondere also in horizontaler Richtung weiter ausgedehnt sind als in jeder hierzu transversalen Richtung,
wobei der rahmenartige Tragabschnitt zwei erste Rippen (61) aufweist,
wobei die zwei ersten Rippen (61) voneinander beabstandet und sind und jeweils mit der ersten Querrippe (62) verbunden sind, insbesondere an zwei voneinander beabstandeten Stellen,
insbesondere wobei die ersten Rippen (61) sich hauptsächlich in vertikaler Richtung erstrecken, insbesondere also in vertikaler Richtung weiter ausgedehnt sind als in jeder hierzu transversalen Richtung,
wobei die zwei zweiten Rippen (61) voneinander beabstandet sind und jeweils mit der zweiten Querrippe (62) verbunden sind, insbesondere an zwei voneinander beabstandeten Stellen,
insbesondere wobei die zweiten Rippen (61) sich hauptsächlich in vertikaler Richtung erstrecken, insbesondere also in vertikaler Richtung weiter ausgedehnt sind als in jeder hierzu transversalen Richtung.

7. Getriebe nach mindestens einem der vorangegangenen Ansprüche,
**dadurch gekennzeichnet, dass**
wobei jede erste Rippe (61) und jede zweite Rippe (61) an ihrem von der jeweiligen Querrippe (62) abgewandten Endbereich eine Tragöse (63) aufweist.

8. Getriebe nach mindestens einem der vorangegangenen Ansprüche,
**dadurch gekennzeichnet, dass**
eine erste Rippe (61) an ihrem Endbereich mit einem Balken (60), insbesondere Tragbalken, verbunden ist, der an seinem anderen Ende mit dem Endbereich einer zweiten Rippe (61) verbunden ist,
wobei die andere Rippe (61) an ihrem Endbereich mit einem Balken (60), insbesondere Tragbalken, verbunden ist, der wiederum an seinem anderen Ende mit dem Endbereich der anderen zweiten Rippe (61) verbunden ist,
insbesondere wobei die beiden Balken (60) parallel und voneinander beabstandet angeordnet sind.

9. Getriebe nach mindestens einem der vorangegangenen Ansprüche,
**dadurch gekennzeichnet, dass**
ein Gehäusedeckel (4) eine Öffnung des Gehäuseoberteils (1) verschließt, welche von dem rahmenförmigen Tragabschnitt umfasst ist, insbesondere mit Abstand, insbesondere so dass der rahmenförmige Tragabschnitt die Öffnung nicht direkt berührt sondern von der Öffnung beabstandet ist.

10. Getriebe nach mindestens einem der vorangegangenen Ansprüche,
**dadurch gekennzeichnet, dass**
eine Welle (101) des Getriebes mittels eines Lagers im Gehäuse gelagert ist,
wobei ein erster Teil der Lageraufnahme im Gehäuseoberteil (1) und ein zweiter Teil der Lageraufnahme im Gehäuseunterteil (2) angeordnet ist,
wobei der erste Teil der Lageraufnahme als aufgedickter Abschnitt ausgeführt ist und mit demjenigen Bereich der Querrippen (62) verbunden ist, an dem auch die jeweilige Rippe verbunden ist.

## Claims

1. A transmission with housing,
wherein a pan for carrying oil and reducing churning losses surrounds a peripheral portion of a toothed part, in particular gear wheel (100), in particular in the radial and in the axial direction,
wherein the pan is composed at least of three parts, i.e. at least of a bottom plate (103) and two side walls, wherein the bottom plate (103) is screw-connected to the two side walls,
wherein the pan is fastened to the housing,
wherein the pan has a cutout, in particular a channel, in particular on its deepest surface region, in particular therefore on the surface region having the greatest radial distance,
wherein upon rotary movement of the gear wheel (100) oil is delivered out of the oil sump of the transmission through the cutout between the pan and gear wheel (100), in particular to a higher position than the level of the oil sump,
wherein the bottom plate (103) and the side walls are stamped and bent parts,
wherein the bottom plate (103) has tab portions (120) extending in the radial direction, to which the side walls are screw-connected by means of screw connection,
wherein a side wall (102) has a marking on which a drill hole for passing a screw of the screw connection through can be formed,
wherein the housing has an upper housing part (1) and a lower housing part (2),
wherein the upper housing part (1) has a frame-like supporting portion on which wall portions are formed,
wherein the frame-like supporting portion is formed in one piece, i.e. in one part, with the wall portions as a cast steel part.

2. A transmission according to Claim 1,
**characterised in that**
the distance, in particular the distance existing in the radial direction, between the bottom plate (103) and the tips of the toothing in the angle-at-circumference region covered by the pan is constant.

3. A transmission according to at least one of the preceding claims,
**characterised in that**
the cutout, in particular the channel, is limited by the bottom plate (103) and the two side walls.

4. A transmission according to at least one of the preceding claims,
**characterised in that**
the bottom plate (103) and each side wall (102) in each case is designed in one piece, i.e. in one part.

5. A transmission according to at least one of the preceding claims,
**characterised in that**
the greatest wall thickness of the wall portions is less than the greatest wall thickness of the supporting portion.

6. A transmission according to at least one of the preceding claims,
**characterised in that**
the frame-like supporting portion of the upper housing part (1) has a first and a second transverse rib (62), in particular wherein the transverse ribs extend mainly in the horizontal direction, in particular therefore are extended further in the horizontal direction than in any direction transverse thereto,
wherein the frame-like supporting portion has two first ribs (61),
wherein the two first ribs (61) are [and] spaced apart from each other and are connected in each case to the first transverse rib (62), in particular at two points which are spaced apart from each other,
in particular wherein the first ribs (61) extend mainly in the vertical direction, in particular therefore are extended further in the vertical direction than in any direction transverse thereto,
wherein the two second ribs (61) are spaced apart from each other and are connected in each case to the second transverse rib (62), in particular at two points which are spaced apart from each other,
in particular wherein the second ribs (61) extend mainly in the vertical direction, in particular therefore are extended further in the vertical direction than in any direction transverse thereto.

7. A transmission according to at least one of the preceding claims,
**characterised in that**
wherein each first rib (61) and each second rib (61) has a lifting eye (63) at its end region facing away from the respective transverse rib (62).

8. A transmission according to at least one of the preceding claims,
**characterised in that**
a first rib (61) is connected at its end region to a bar (60), in particular supporting bar, which at its other end is connected to the end region of a second rib (61),
wherein the other rib (61) is connected at its end region to a bar (60), in particular supporting bar, which in turn at its other end is connected to the end region of the other second rib (61),
in particular wherein the two bars (60) are arranged parallel and spaced apart from each other.

9. A transmission according to at least one of the preceding claims,
**characterised in that**
a housing cover (4) closes an opening of the upper housing part (1) which is encompassed by the frame-shaped supporting portion, in particular at a distance, in particular so that the frame-shaped supporting portion does not directly touch the opening, but is spaced apart from the opening.

10. A transmission according to at least one of the preceding claims,
**characterised in that**
a shaft (101) of the transmission is mounted in the housing by means of a bearing,
wherein a first part of the bearing receptacle is arranged in the upper housing part (1) and a second part of the bearing receptacle in the lower housing part (2),
wherein the first part of the bearing receptacle is embodied as a thickened portion and is connected to that region of the transverse ribs (62) on which the respective rib is also connected.

## Revendications

1. Transmission équipée d'un carter,
dans laquelle une cuvette, dédiée au guidage d'huile et à la diminution de déperditions par barbotage, entoure une zone périphérique d'une partie dentée, notamment d'une roue dentée (100), en particulier dans des directions radiale et axiale,
ladite cuvette étant au moins composée de trois parties, c'est-à-dire d'au moins une plaque de fond (103) et de deux parois latérales, laquelle plaque de fond (103) est reliée par vissage aux deux parois latérales,
ladite cuvette étant fixée au carter,
sachant que la cuvette est munie d'un évidement, notamment d'un canal, en particulier dans la région la plus profonde de sa surface, c'est-à-dire dans la région de la surface qui présente l'espacement radial le plus accentué,
sachant que, lors d'un mouvement rotatoire de la roue dentée (100), de l'huile est refoulée entre la cuvette et ladite roue dentée (100) à partir du bac à huile de la transmission, à travers ledit évidement, en particulier vers un emplacement situé plus haut que le niveau dudit bac à huile,
la plaque de fond (103) et les parois latérales étant des pièces venues d'estampage et de pliage,
ladite plaque de fond (103) étant pourvue de zones formant pattes (120), qui s'étendent dans la direction radiale et auxquelles lesdites parois latérales sont reliées par vissage, au moyen d'une solidarisation vissée,
sachant qu'une paroi latérale (102) comporte une caractérisation au niveau de laquelle un trou foré peut être pratiqué, en vue du passage d'une vis de ladite solidarisation vissée,
le carter comprenant une partie supérieure (1) et une partie inférieure (2),
sachant que la partie supérieure (1) dudit carter est munie d'une zone de support du type cadre, avec laquelle des zones de paroi font corps,
ladite zone de support du type cadre étant de réalisation monobloc, c'est-à-dire d'un seul tenant avec lesdites zones de paroi, sous la forme d'une pièce en acier moulé.

2. Transmission selon la revendication 1,
**caractérisée par le fait que**
la distance, en particulier la distance existant dans la direction radiale et comprise entre la plaque de fond (103) et les têtes de la denture, est constante dans la plage d'angles périphériques couverte par la cuvette.

3. Transmission selon au moins l'une des revendications précédentes,
**caractérisée par le fait que**
l'évidement, en particulier le canal, est délimité par la plaque de fond (103) et par les deux parois latérales.

4. Transmission selon au moins l'une des revendications précédentes,
**caractérisée par le fait que**
la plaque de fond (103), et chaque paroi latérale (102), présentent à chaque fois une réalisation monobloc, c'est-à-dire d'une seule pièce.

5. Transmission selon au moins l'une des revendications précédentes,
**caractérisée par le fait que**
l'épaisseur maximale des zones de paroi est inférieure à l'épaisseur de paroi maximale de la zone de support.

6. Transmission selon au moins l'une des revendications précédentes,
**caractérisée par le fait que**
la zone de support de la partie supérieure (1) du carter, du type cadre, comprend des première et seconde nervures transversales (62), sachant notamment que lesdites nervures transversales s'étendent majoritairement dans une direction horizontale, c'est-à-dire, en particulier, que leur étendue est plus grande, dans ladite direction horizontale, que dans toute autre direction transversale par rapport à cette dernière,
ladite zone de support, du type cadre, étant pourvue de deux premières nervures (61), lesquelles deux premières nervures (61) sont espacées l'une de l'autre et sont respectivement reliées à la première nervure transversale (62), notamment en deux endroits situés à distance l'un de l'autre,
sachant notamment que lesdites premières nervures (61) s'étendent majoritairement dans une direction verticale, c'est-à-dire, en particulier, que leur étendue est plus grande, dans ladite direction verticale, que dans toute autre direction transversale par rapport à cette dernière,
les deux secondes nervures (61) étant espacées l'une de l'autre et étant respectivement reliées à la seconde nervure transversale (62), notamment en deux endroits situés à distance l'un de l'autre,
sachant notamment que lesdites secondes nervures (61) s'étendent majoritairement dans une direction verticale, c'est-à-dire, en particulier, que leur étendue est plus grande, dans ladite direction verticale, que dans toute autre direction transversale par rapport à cette dernière.

7. Transmission selon au moins l'une des revendications précédentes,
**caractérisée par le fait que**
chaque première nervure (61) et chaque seconde nervure (61) sont dotées d'où œillet de support (63) au niveau de leur région extrême tournée à l'opposé de la nervure transversale (62) respective.

8. Transmission selon au moins l'une des revendications précédentes,
**caractérisée par le fait**
**qu'**une première nervure (61) est reliée, au niveau de sa région extrême, à une barre (60) se présentant notamment comme une barre de support reliée, par son autre extrémité, à la région extrême d'une seconde nervure (61),
l'autre nervure (61) étant reliée, au niveau de sa région extrême, à une barre (60) se présentant notamment comme une barre de support reliée à son tour, par son autre extrémité, à la région extrême de l'autre seconde nervure (61),
sachant, en particulier, que les deux barres (60) sont disposées parallèlement et à distance l'une de l'autre.

9. Transmission selon au moins l'une des revendications précédentes,
**caractérisée par le fait**
**qu'**un couvercle (4) du carter obture un orifice de la partie supérieure (1) dudit carter qui est entouré, notamment à distance, par la zone de support en forme de cadre, en particulier de façon telle que ladite zone de support, en forme de cadre, ne soit pas en contact direct avec ledit orifice, mais soit espacée dudit orifice.

10. Transmission selon au moins l'une des revendications précédentes,
**caractérisée par le fait**
**qu'**un arbre (101) de ladite transmission est monté dans le carter au moyen d'un palier, une première partie du logement dudit palier, et une seconde partie dudit logement du palier, étant respectivement situées dans la partie supérieure (1) du carter, et dans la partie inférieure (2) dudit carter,
sachant que ladite première partie du logement du palier est réalisée sous la forme d'une zone épaissie, et est reliée à la région des nervures transversales (62) à laquelle la nervure considérée est pareillement reliée.
